# EUROPEAN PATENT SPECIFICATION

(11) **EP 0 431 843 B1**
(45) Date of publication and mention of the grant of the patent: **10.09.1997**
(21) Application number: 90313016.9
(22) Date of filing: 30.11.1990
(51) Int. Cl.: G06K 9/22, G06K 9/68

(54) **Character recognition apparatus**
Zeichenerkennungsgerät
Appareil de reconnaissance de caractères

(30) Priority: 04.12.1989 JP 314956/89
(43) Date of publication of application: 12.06.1991
(73) Proprietor: SONY CORPORATION, Tokyo 141 (JP)
(72) Inventor: Aguro, Masayuki, c/o Patents Division, Shinagawa-ku, Tokyo 141 (JP); Tanaka, Hidekazu, c/o Patents Division, Shinagawa-ku, Tokyo 141 (JP); Yoshida, Kimiyoshi, c/o Patents Division, Shinagawa-ku, Tokyo 141 (JP); Sakano, Akio, c/o Patents Division, Shinagawa-ku, Tokyo 141 (JP)
(74) Representative: Cotter, Ivan John

(56) References cited:
- PATENT ABSTRACTS OF JAPAN vol. 13, no. 345 (P-909)3 August 1983 & JP-A-11 03 787
- PATENT ABSTRACTS OF JAPAN vol. 9, no. 227 (P-388)13 September 1985 & JP-A-60 084 683
- PATENT ABSTRACTS OF JAPAN vol. 7, no. 278 (P-242)10 December 1983 & JP-A-58 155 486
- PATENT ABSTRACTS OF JAPAN vol. 7, no. 206 (P-222)10 September 1983 & JP-A-58 101 378
- PATENT ABSTRACTS OF JAPAN vol. 12, no. 199 (P-714)9 June 1988 & JP-A-63 000 783

## Description

This invention relates to character recognition apparatus.

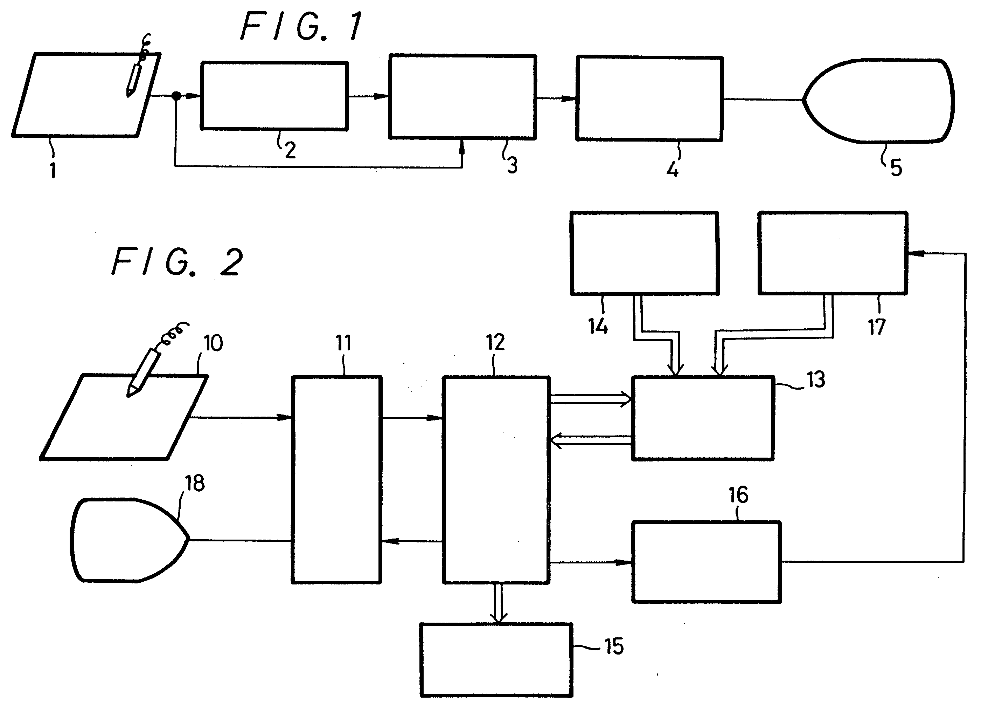

Figure 1 is a block diagram of a previously proposed on-line hand-written character recognition apparatus which comprises a tablet 1, a recognition circuit 2, a nominated character selecting circuit 3, a character pattern generating circuit 4, and a display apparatus 5. A hand-written character written on the tablet 1 is processed by the recognition circuit 2, and one or a plurality of nominated characters and symbols are thereby extracted for the hand-written character. A character code train of the nominated characters is supplied to the nominated character selecting circuit 3 which selects a character code of the first position of nominated characters from the character code train supplied thereto, and the selected character code is supplied to the character pattern generating circuit 4. The character pattern generating circuit 4 generates a character pattern corresponding to the character code and the character pattern is displayed on the display apparatus 5.

In general, when the user wants to select another one of nominated characters and symbols while watching the contents displayed on the display apparatus 5, if the user depresses a key on the tablet 1, a nominated character selection control signal is supplied to the nominated character selected circuit 3 which then selects the next nominated character.

With this apparatus, the user must write the characters with great accuracy and care, because the recognition circuit must recognize very small differences between hand-written characters which are difficult to distinguish.

For example, the user must write the following symbols ( 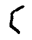 [ < with great care to enable the recognition circuit to distinguish them.

Moreover, in order that all of these symbols can be distinguished by the recognition circuit, very small differences must be distinguished and registered, which causes an increased recognition time and requires an increased capacity of dictionary.

Also, a method of directly obtaining these characters and symbols from the JIS (Japanese Industrial Standards) code, or searching for these characters and symbols in a table imposes a large burden on the user.

Japanese Patent Application Publication No JP-A-11 03 787 (Hitachi), an English language abstract of which appears at PATENT ABSTRACTS OF JAPAN, vol 13, no. 345 (P-909), 3 August 1983, discloses a character recognition apparatus in which a recognised input handwritten character can be registered in a personal dictionary.

Japanese Patent Application Publication No JP-A-60 084 683 (Canon), an English language abstract of which appears at PATENT ABSTRACTS OF JAPAN, vol 9, no. 227 (P-388), 13 September 1985, discloses a character recognition apparatus which can be set to Kana (Japanese syllabary), Kanji (Chinese character) and alphabetical recognition modes. When recognition of input strokes is then effected, the input strokes are collated with a basic stroke pattern registered in a basic stroke dictionary in accordance with the set recognition mode.

Japanese Patent Application Publication No JP-A-58 155 486 (Nippon Denki), an English language abstract of which appears at PATENT ABSTRACTS OF JAPAN, vol 7, no. 278 (P-242), 10 December 1983, discloses a character recognition apparatus in which, when a user enters handwriting, features of each character are obtained and used to generate a private dictionary which is stored and has a register number associated with it. This private dictionary is called up when the associated register number is entered.

Japanese Patent Application Publication No JP-A-58 101 378 (Oki Denki), an English language abstract of which appears at PATENT ABSTRACTS OF JAPAN, vol 7, no. 206 (P-222), 10 September 1983, discloses a character recognition apparatus which has respective dictionaries, namely a Hiragana dictionary, a Katakana dictionary, an alphanumeric and symbol dictionary and a Kanji dictionary. To decrease reading time, the dictionary to be used can be selected in accordance with the type of manuscript information to be inputted.

Japanese Patent Application Publication No JP-A-63 000 783 (Fujitsu), an English language abstract of which appears at PATENT ABSTRACTS OF JAPAN, vol 112, no. 199 (P-714), 9 June 1988, discloses a handwritten character recognition apparatus in which it is possible arbitrarily to select a set of characters to be recognised.

According to the present invention there is provided a character recognition apparatus comprising:
input means for obtaining hand-written information;
character dictionary memory means for storing characteristics of characters and symbols;
character recognition means for determining characters or symbols of said hand-written information in association with characteristics of characters and symbols stored in said character dictionary memory means;
group table memory means for storing group tables of characters and symbols, each group table comprising a group representing character or symbol registered in said character dictionary memory means and at least one character or symbol associated with said group representing character or symbol;
display means for displaying thus recognized characters or symbols and, if a recognized character or symbol is registered as a group representing character or symbol in said group table memory means, said at least one associated character or symbol; and
means connected to said group table memory means for changing the contents of the group tables of said group table memory means.

The invention will now be described by way of example with reference to the accompanying drawings, throughout which like parts are referred to by like references, and in which:
Figure 1 is a block diagram showing a previously proposed character recognition apparatus;
Figure 2 is a block diagram showing an embodiment of character recognition apparatus according to the present invention;
Figure 3 is a flow chart of operation of the apparatus of Figure 2;
Figures 4A to 4C are schematic diagrams showing examples of group tables of characters and symbols;
Figure 5 (formed of Figures 5A and 5B) is another flow chart of operation of the apparatus of Figure 2; and
Figures 6A to 6C are schematic diagrams used for further explanation.

The embodiment of character recognition apparatus shown in Figure 2 comprises a tablet 10, an interface circuit 11, a system control apparatus 12, a hand-written character recognition apparatus 13, a character dictionary memory 14, a buffer memory 15 for nominated characters and symbols, a character table changing apparatus 16, a character group table memory 17, and a display apparatus 18.

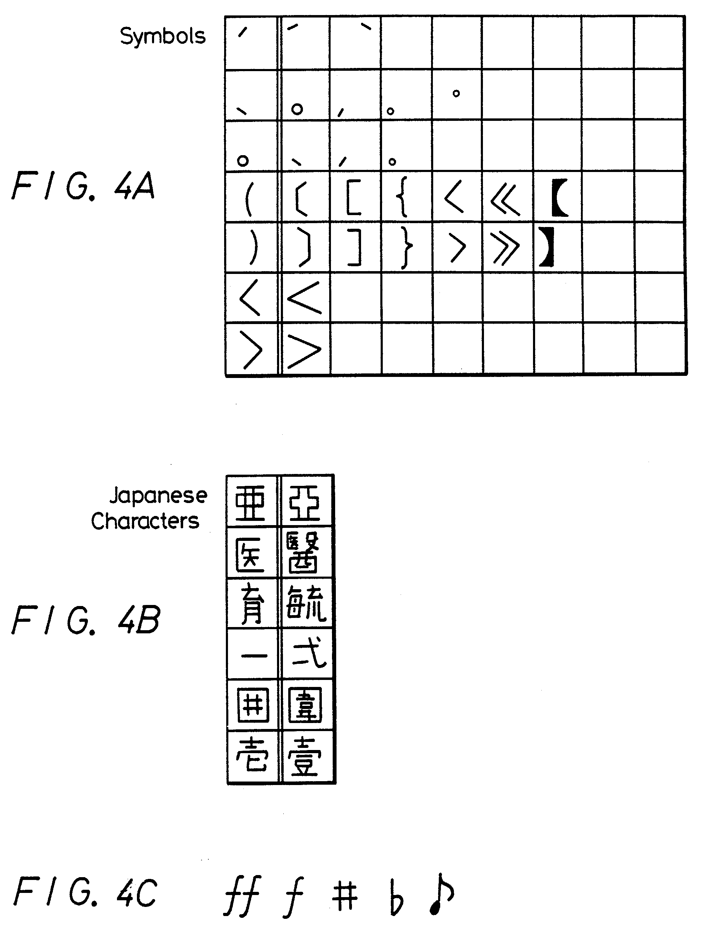

Character group tables shown in, for example, Figures 4A and 4B are provided in the character group table memory 17. As shown, group representing characters or symbols are written at the left of the character group tables, and characters or symbols similar to the group representing characters or symbols are written to the right thereof. The character group tables are not limited to similar characters and symbols, and characters and symbols which are not similar can be put into character group tables as shown in Figure 4C. (Note that the symbol on the left in the graph table shown in Fig. 4C consists of two alphabetical characters, namely the letter "f" (repeated).)

Only the group representing characters or symbols are registered in the character dictionary memory 14. When the user wants to output another character belonging to a certain group representing character, the user manually writes the group representing character on the tablet 10 and reads out data of a corresponding group table, so that a desired character is then selectable instead of the group representing character.

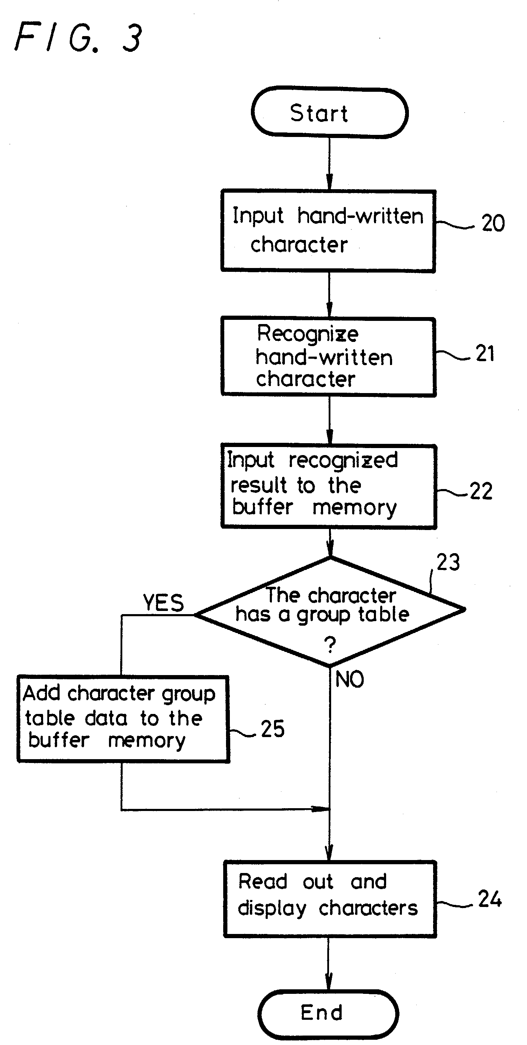

A normal mode of the apparatus of Figure 2 will now be described with reference to the flow chart of Figure 3. Following start, the user enters a certain character on the tablet 10 manually. The hand-written information is supplied through the interface circuit 11 to the system control apparatus 12 and is thereby processed. Then, corresponding stroke data are supplied from the system control apparatus 12 to the hand-written character recognition apparatus 13. In step 21, the hand-written character recognition apparatus 13 recognizes the hand-written character by comparing stroke data with writing order or the like with reference to the character dictionary memory 14. In step 22, the recognized result is supplied to the nominated character buffer memory 15 through the system control apparatus 12 in the form of JIS code and evaluated points.

In step 23 the system control apparatus 12 determines through the hand-written character recognition apparatus 13, with reference to the character group memory 17, whether or not the recognized character supplied to the nominated character buffer memory 15 has a character group table. If the character does not have a character group table as represented by a NO at step 23, the routine proceeds to step 24. In step 24, the nominated character is read out from the nominated character buffer memory 15 and is displayed on the display apparatus 18. If, on the other hand, the character has a group table as represented by a YES at step 23, then the routine proceeds to step 25. In step 25, corresponding character group table data are read out from the character group table memory 17 and then added to the nominated character stored in the selected genre buffer memory 15. Then, the routine proceeds to step 24 where the nominated character and accompanying character group table data are read out from the nominated character buffer memory 15 and displayed on the display apparatus 18.

When the user wants to select another character from the character group table data instead of the first nominated character, the user must hit that character. Then, the display apparatus 18 displays the character that the user hits, instead of the first nominated character.

Since only the group representing characters are registered in the character dictionary memory 14 as described above, the storage capacity of the dictionary can be reduced, which results in a reduced recognition time and an increased recognition speed. Moreover, only the group representing characters are registered on the character dictionary memory 14 and other group characters need not be registered on the character dictionary memory 14, so that the description of each character can be made easy and simplified, which saves time.

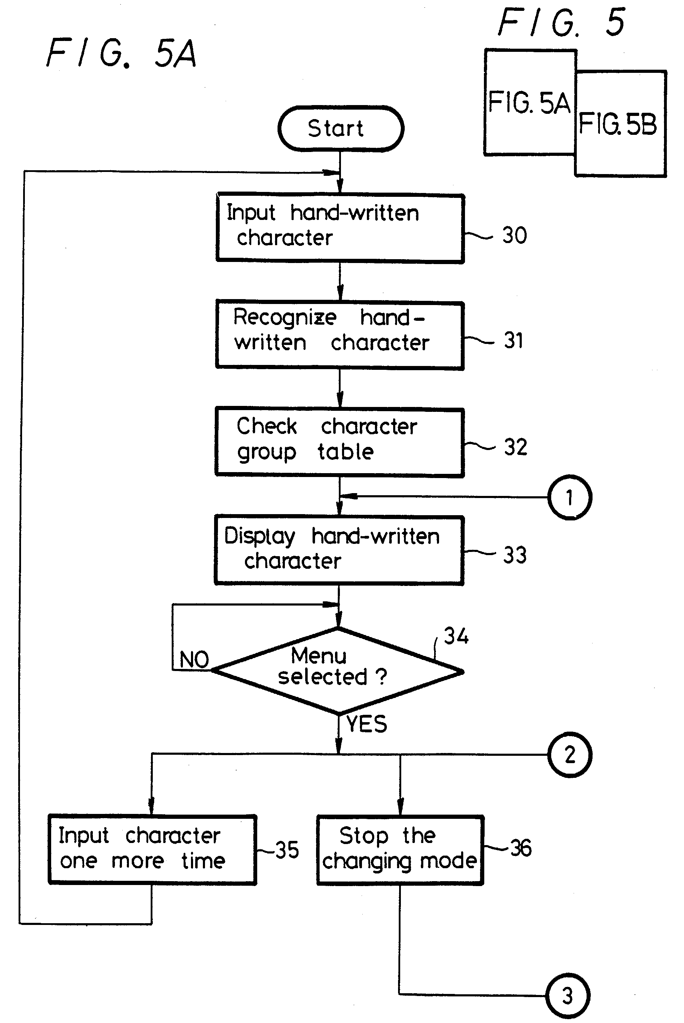

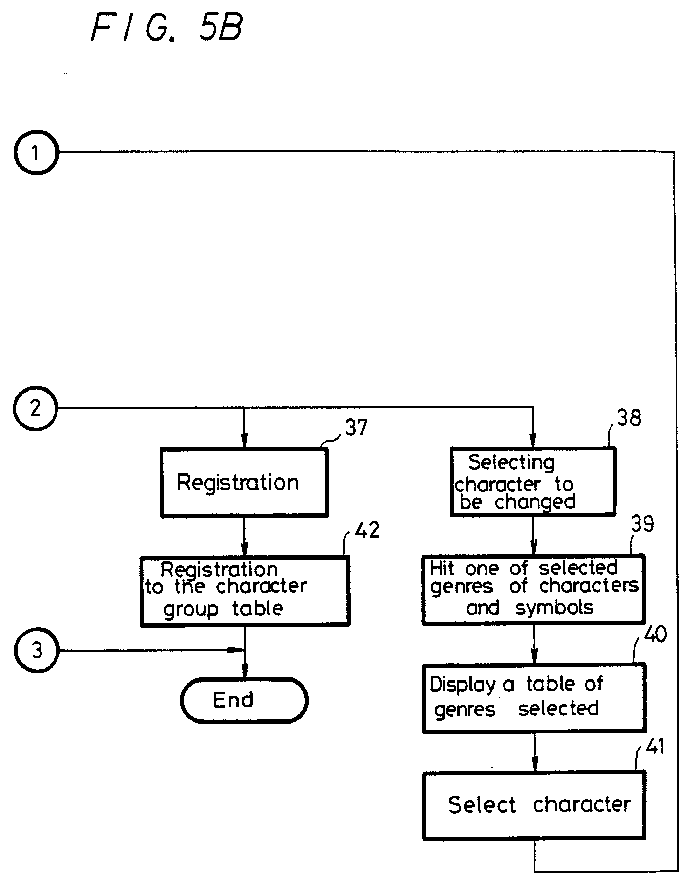

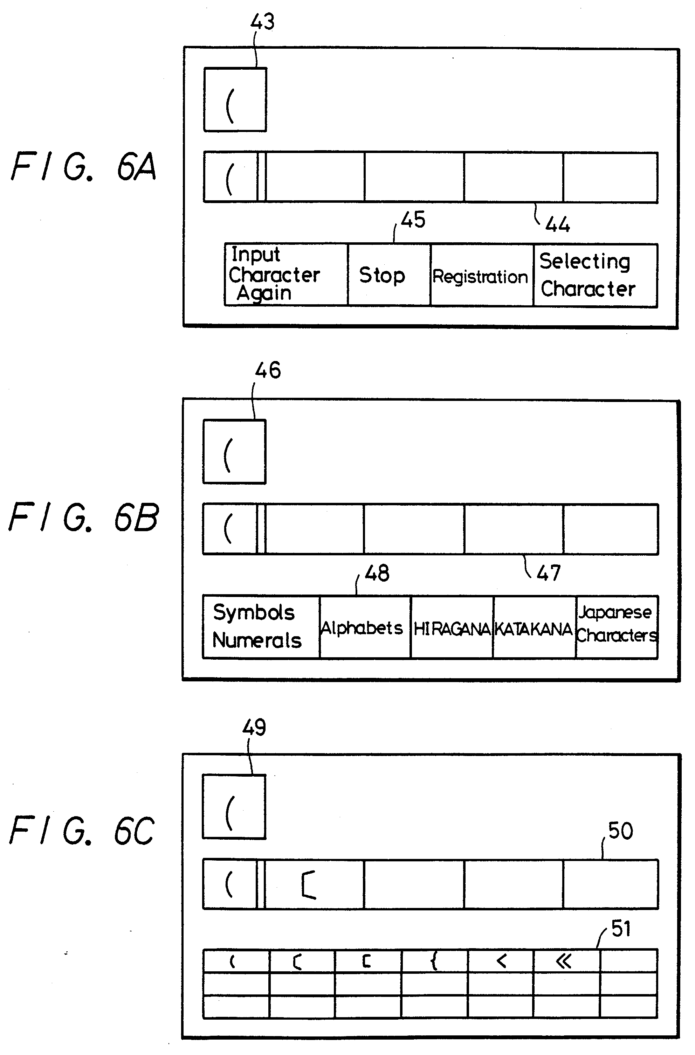

A changing mode in which the contents of the character group table memory 17 shown in Figure 2 can be changed will be explained with reference to the chart of Figure 5, and the diagrams of Figures 6A to 6C.

If the embodiment if set in the changing mode, the display of the display apparatus 18 is changed as shown in Figures 6A, and comprises a display portion 43 displaying a hand-written character, a display portion 44 displaying the content of the nominated character buffer memory 15 (see Figure 2), and a display portion 45 displaying menus. The menus are [input character again], [stop], [registration] and [character selection] as will be described later. Although the symbol [ ( ] is already displayed on the display portions 43 and 44 at its portion in which characters of first nominated character are displayed as shown in Figure 6A, for obtaining a better understanding of the present invention, [ ( ] is not yet displayed in the initial state in actual practice.

Referring to Figure 5, following start, in step 30, a character of, for example, [ ( ] is entered and displayed on the display portion 43 by means of the input tablet 10. In the next step 31, a hand-written character is recognized by the hand-written character recognition apparatus 13 with reference to the character dictionary memory 14. A recognized result is supplied to and stored in the nominated character buffer memory 15. In the next step 32, the character group table of the character group table memory 17 is checked and the checked result is displayed at step 33 whereat the hand-written character [ ( ] is displayed on the display portion 44 of Figure 6A as the first nominated character. Figure 6A shows the condition that a character is not yet registered on the character group table.

It is determined in step 34 by the character table changing apparatus 16 whether or not the menu is selected. If a NO is obtained at step 34, then the routine returns to step 34 and the step 34 is repeated until a YES is obtained. On the other hand, if a YES is obtained at step 34, the routine proceeds to the respective menus, that is, steps 35, 36, 37 and 38. In step 35, a character is entered one more time and a group representing character is determined. In step 36, the changing mode is stopped, and in step 37, a registration to a character group table is done. Selection of a character to be changed is done in the step 38.

Incidently, if the user hits [character selection] on the display portion 45 of Figure 6A, the displayed condition of the display apparatus 18 is changed as shown in Figure 6B. As shown in Figure 6B, the display portions 46 and 47 perform the displays exactly the same as those of the display portions 43 and 44 in Figure 6A. The display portion 48 displays thereon selected genres of characters and symbols. If the user hits one of the selected genres of characters and symbols, for example, [symbols and numerals] on the display portion 48 in step 39, a table of genres selected is displayed on a display portion 51 in step 40 as shown in Figure 6C. In Figure 6C, the display portions 49 and 50 carry displays exactly the same as those of the display portions 43 and 44 in Figure 6A. If in step 41 the user selects one symbol, for example, [ 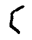 ] on the display portion 51, then data of this selected symbol are input to the nominated character buffer memory 15 and displayed on the display apparatus 18 in step 33. Accordingly, the display portion 50 in Figure 5C displays thereon the character [ 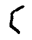 ] after the first nominated character [ ( ].

In a like manner, the character to be grouped is selected, stored in the nominated character buffer memory 15 and is displayed on the display portion 50.

After the character selection has ended, [registration] on the display portion 45 is selected in step 37 and the apparatus is set to the registration mode. In the next step 42, the character table changing apparatus 16 reads out the contents of the nominated character buffer memory 15 and registers the read-out contents to the character group table of the character group memory 17.

Under this condition, if the patterns of Figures 6A and 6B are displayed, the display portions 44 and 47 display thereon the character other than the first nominated character, for example, [ 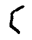 ] and so on. If the user wants to delete a character of the grouped characters which are registered, when the user selects the character to be deleted from the grouped characters on the display portion 47 under the condition that the pattern of Figure 6B is displayed, the thus hit character is erased from the display and the content of such character is also erased from the nominated character buffer memory 15. When the user hits [registration], data of such character is deleted from the character group table of the character group table memory 17.

As described above, the character group table of the character group table 17 can be made freely and desired characters and symbols or the like can be registered freely.

Thus, as described above, since the grouped character accompanying the nominated character which results from recognizing the input character, symbol or the like is output with reference to the character group memory, only the character and symbol which can become the nominated character and symbol are registered in the character dictionary memory, which reduces the required capacity of the dictionary and reduces the recognition time, so that recognition speed is increased. Further, since only the group representing characters are written as character and symbol or the like, the description of the character, symbol or the like can be simplified, which can save time and labour. Furthermore, since the content of the character group table is changed, a desired character group table for the user can be made freely, which provides an enlarged application range of this character recognition apparatus.

## Claims

1. A character recognition apparatus comprising:
input means (1) for obtaining hand-written information;
character dictionary memory means (14) for storing characteristics of characters and symbols;
character recognition means (13) for determining characters or symbols of said hand-written information in association with characteristics of characters and symbols stored in said character dictionary memory means (14);
group table memory means (17) for storing group tables of characters and symbols, each group table comprising a group representing character or symbol registered in said character dictionary memory means (14) and at least one character or symbol associated with said group representing character or symbol;
display means (18) for displaying thus recognized characters or symbols and, if a recognized character or symbol is registered as a group representing character or symbol in said group table memory means (17), said at least one associated character or symbol; and
means (16) connected to said group table memory means (17) for changing the contents of the group tables of said group table memory means (17).

2. Apparatus according to claim 1 wherein said changing group table means (16) includes means for displaying a selected genre of characters and symbols.

3. Apparatus according to claim 2 wherein said changing group table means (16) includes means for adding characters or symbols by selecting characters or symbols displayed by said selected genre display means.

4. Apparatus according to claim 1 wherein said changing group table means (16) includes means for deleting characters or symbols by selecting one of characters of said group displayed together with said recognized character by said display means (18).

## Patentansprüche

1. Zeichenerkennungsvorrichtung aufweisend:
eine Eingabevorrichtung (1) zur Aufname handgeschriebener Information,
eine Zeichenwörterbuch-Speichereinrichtung (14) zur Speicherung von Merkmalen von Zeichen und Symbolen,
eine Zeichenerkennungsvorrichtung (13) zur Bestimmung von Zeichen oder Symbolen der handgeschriebenen Information in Zuordnung zu den Merkmalen der Zeichen und Symbole, die in der Zeichenwörterbuch-Speichereinrichtung (14) gespeichert sind,
eine Gruppentabelle-Speichereinrichtung (17) zur Speicherung von Gruppentabellen von Zeichen und Symbolen, wobei jede Gruppentabelle ein die Gruppe wiedergebendes Zeichen oder Symbol aufweist, das in der Zeichenwörterbuch-Speichereinrichtung (14) registriert ist, und wenigstens ein Zeichen oder Symbol, das dem die Gruppe wiedergegebenden Zeichen oder Symbol zugeordnet ist,
eine Anzeigeeinrichtung (18) zur Anzeige so erkannter Zeichen oder Symbole, und, wenn ein erkanntes Zeichen oder Symbol als ein eine Gruppe wiedergebendes Zeichen oder Symbol in der Gruppentabellen-Speichereinrichtung (17) registriert ist, des wenigstens einen zugeordneten Zeichens oder Symbols, und
eine Einrichtung (16), die mit der Gruppentabellen-Speichereinrichtung (17) verbunden ist, um die Inhalte der Gruppentabelle der Gruppentabellen-Speichereinrichtung (17) auszutauschen.

2. Vorrichtung nach Anspruch 1,
bei der die Änderungsgruppen-Tabelleneinrichtung (16) eine Einrichtung zur Anzeige einer gewählten Klasse an Zeichen und Symbolen aufweist.

3. Vorrichtung nach Anspruch 2,
bei der die Änderungsgruppen-Tabelleneinrichtung (16) eine Einrichtung zur Hinzufügung von Zeichen oder Symbolen durch Wahl von Zeichen oder Symbolen aufweist, die durch die ausgewählte Klassen-Anzeigeeinrichtung angezeigt ist.

4. Vorrichtung nach Anspruch 1,
bei der die Änderungsgruppen-Tabelleneinrichtung (16) eine Einrichtung zur Beseitung von Zeichen oder Symbolen durch Wahl eines der Zeichen der Gruppe aufweist, die zusammen mit dem erkannten Zeichen durch die Anzeigeeinrichtung (18) angezeigt werden.

## Revendications

1. Un appareil de reconnaissance de caractères, comprenant :
des moyens d'entrée (1) pour obtenir une information manuscrite;
des moyens de mémoire de dictionnaire de caractères (14) pour enregistrer des caractéristiques de caractères et de symboles;
des moyens de reconnaissance de caractères (13) pour déterminer des caractères ou des symboles de l'information manuscrite, en association avec des caractéristiques de caractères et de symboles enregistrées dans les moyens de mémoire de dictionnaire de caractères (14);
des moyens de mémoire de tables de groupe (17) pour enregistrer des tables de groupe de caractères et de symboles, chaque table de groupe comprenant un caractère ou symbole représentant un groupe, enregistré dans les moyens de mémoire de dictionnaire de caractères (14), et au moins un caractère ou symbole associé au caractère ou au symbole représentant un groupe;
des moyens de visualisation (18) pour visualiser des caractères ou des symboles ainsi reconnus et, si un caractère ou un symbole reconnu est enregistré comme un caractère ou un symbole représentant un groupe dans les moyens de mémoire de tables de groupe (17), ce caractère ou symbole associé, ou chacun d'eux; et
des moyens (16) connectés aux moyens de mémoire de tables de groupe (17) pour changer le contenu des tables de groupe des moyens de mémoire de tables de groupe (17).

2. Appareil selon la revendication 1, dans lequel les moyens de changement de tables de groupe (16) comprennent des moyens pour visualiser un genre de caractères et de symboles qui est sélectionné.

3. Appareil selon la revendication 2, dans lequel les moyens de changement de tables de groupe (16) comprennent des moyens pour ajouter des caractères ou des symboles en sélectionnant des caractères ou des symboles qui sont visualisés par les moyens de visualisation de genre sélectionné.

4. Appareil selon la revendication 1, dans lequel les moyens de changement de tables de groupe (16) comprennent des moyens pour supprimer des caractères ou des symboles en sélectionnant l'un des caractères du groupe visualisé par les moyens de visualisation (18), conjointement au caractère reconnu.
